# EUROPÄISCHE PATENTSCHRIFT

(11) **EP 3 090 825 B1**
(45) Veröffentlichungstag und Bekanntmachung des Hinweises auf die Patenterteilung: **30.08.2017**
(21) Anmeldenummer: 15164093.5
(22) Anmeldetag: 17.04.2015
(51) Int. Cl.: B23D 61/18, B28D 1/12

(54) **DIAMANTSÄGEBLATT ZUM AUSBILDEN EINER OBERFLÄCHENSTRUKTUR AUF EINER FAHRBAHNOBERFLÄCHE**
DIAMOND SAW BLADE FOR FORMING A SURFACE STRUCTURE ON A ROAD SURFACE
LAME DE SCIE DIAMANTÉE DESTINÉE À LA FORMATION D'UNE STRUCTURE DE SURFACE SUR UNE SURFACE DE VOIE DE CIRCULATION

(43) Veröffentlichungstag der Anmeldung: 09.11.2016
(73) Patentinhaber: CEDIMA Diamentwerkzeug- und Maschinenbaugesellschaft mbH, 29227 Celle (DE)
(72) Erfinder: Redich, Alexander, 30175 Hannover (DE)
(74) Vertreter: Bremer, Ulrich

(56) Entgegenhaltungen:
- DE-A1- 2 318 378
- DE-A1- 2 438 601
- GB-A- 2 290 050
- US-A- 4 883 500
- US-A1- 2003 089 364
- US-A1- 2008 202 488

## Beschreibung

Die Erfindung betrifft ein Sägewerkzeug, gemäß dem Oberbegriff des Anspruchs 1, zum Ausbilden einer Oberflächenstruktur, insbesondere von Längsrillen, auf einer Fahrbahnoberfläche sowie eine Maschine mit einem derartigen Sägewerkzeug sowie ein Verfahren, gemäß dem Oberbegriff des Anspruchs 13, zum Ausbilden einer Oberflächenstruktur auf einer Fahrbahnoberfläche. Ein solches Sägewerkzeug und ein solches Verfahren ist der GB2290050 zu entnehmen. Bei der Herstellung einer Fahrbahn für Fahrzeuge wird nach dem Aufbringen beispielsweise von Beton auf einen Untergrund in mehreren Schritten eine planare Fahrbahnoberfläche erzeugt, die jedoch zum sicheren Befahren mit einem Fahrzeug zu glatt ist. Um die Fahrbahnoberfläche aufzurauen, wird ein Sägewerkzeug mit Diamantsägeblättern verwendet, das die Fahrbahnoberfläche mit einer Strukturierung bzw. einer Textur, beispielsweise mit in Fahrtrichtung verlaufenden Längsrillen versieht. Die Längsrillen sorgen insbesondere dafür, eine Griffigkeit der Fahrbahnoberfläche für ein darauf fahrendes Fahrzeug zu verbessern. Unter Griffigkeit wird hierbei verstanden, wie gut die Antriebskraft des Fahrzeuges über den Fahrzeugreifen auf die Fahrbahnoberfläche übertragen werden kann.

Das Verfahren zum Einbringen einer solchen Längsrille zur Verbesserung der Griffigkeit wird auch als "grinding" bezeichnet. Weiterhin können Längsrillen dazu dienen, Wasser auf der Fahrbahnoberfläche derartig zu verteilen, dass Aquaplaning weitestgehend vermieden werden kann. Derartige Längsrillen ragen tiefer in die Fahrbahnoberfläche und werden in einem "grooving"-Verfahren eingebracht.

Durch "grooving" und "grinding" eingebrachte Längsrillen können zu einem erhöhten Lärmpegel führen, der insbesondere abhängig von einer Rillenbreite, einem Rillenabstand zueinander, einer Rillentiefe und einer Form der Längsrillen ist. Somit kann insbesondere in bewohnten Gegenden eine störende Lärmbelästigung auftreten. Die o.g. Faktoren beeinflussen aber auch die Griffigkeit, so dass der Lärm und die Griffigkeit in einer bestimmten Wechselbeziehung zueinander stehen, die bei der Herstellung der Längsrillen zu beachten ist.

Bisherige Verfahren zum Strukturieren von Fahrbahnoberflächen mit Längsrillen sehen vor, eine Maschine mit einem Sägewerkzeug bereitzustellen, wobei das Sägewerkzeug mehrere voneinander beabstandete Diamantsägeblätter aufweist, die auf einer drehbaren Welle angeordnet sind. Das sich drehende Sägewerkzeug wird an die Fahrbahnoberfläche angenähert bzw. auf diese aufgedrückt, und in Fahrtrichtung über die Fahrbahn geschoben, so dass die Diamantsägeblätter beim Drehen der Welle auf der Fahrbahnoberfläche aufliegen und Längsrillen ausfräsen.

Jedes Diamantsägeblatt weist dazu einen als Scheibe ausgeführten Kern mit einem konzentrischen Loch auf, wobei das Diamantsägeblatt mit dem Loch auf die Welle aufgesetzt und daran verdrehfest befestigt ist. Auf einem äußeren Umfang des Kerns sind umlaufend ein oder mehrere voneinander in tangentialer Richtung beabstandete Segmente befestigt, z.B. durch Löten, Sintern, Kleben oder Schweißen. Jedes Segment besteht aus einem z.B. durch Sintern oder Freisintern gehärteten metallischen Material (Bindung), das insbesondere Diamanten und ein gehärtetes, verpresstes Metallpulver aufweist. Die Materialzusammensetzung des Metallpulvers und die Konzentration und die Form der Diamanten definieren dabei die Härte bzw. die Verschleißfestigkeit des Segmentes.

Beim Herstellen der Längsrillen wird je nach Härte der Fahrbahn und Verschleißfestigkeit der Segmente eine entsprechende Längsrille ausgefräst, wobei die Rillenbreite insbesondere durch eine Segmentbreite bestimmt ist. Der Abstand zweier benachbarter Längsrillen ist durch einen Abstand benachbarter Sägeblätter bzw. benachbarter Segmente definiert. Jedes Sägeblatt fräst dabei lediglich eine Längsrille in die Fahrbahnoberfläche, so dass die Anzahl der pro Sägewerkzeug ausfräsbaren Längsrillen durch die Anzahl der nebeneinanderliegenden Sägeblätter auf der Welle bestimmt ist. Die Verschleißfestigkeit der Segmente benachbarter Diamantsägeblätter ist in etwa gleich, so dass jede Rille in etwa mit gleicher Rillentiefe und Form ausgefräst wird, falls der Verschleißverlauf über das gesamte Sägewerkzeug ungefähr gleichmäßig stattfindet.

Nachteilig dabei ist, dass die Rillenbreite und der Rillenabstand mit einem derartigen Sägewerkzeug nach unten technisch begrenzt ist, da bei sehr dünnen Diamantsägeblättern bzw. sehr dünnen Kernen, z.B. mit einer Kernbreite von weniger als 2mm, die in einem geringeren Abstand zueinander auf der Welle mit hoher Geschwindigkeit gedreht werden, eine zuverlässige Funktion nicht gewährleistetet werden kann. Denn wird eine minimale Breite von ca. 2mm unterschritten, kann der in radialer Richtung ausgedehnte Kern nicht mehr ausreichend gespannt werden, wodurch der Kern wellig wird und somit eine in axialer Richtung konstante Rillenbreite nicht gewährleistet werden kann; insbesondere können die Sägeblätter auch anfangen zu schwingen, wodurch eine nachhaltige und homogene Strukturierung der Fahrbahnoberfläche nicht gewährleistet werden kann. Zudem kann bei einem zu dünnen Kern die Antriebsleistung nicht auf die Segmente übertragen werden; der Kern reißt oder biegt sich; somit ist die minimale Breite des Kerns und somit auch des Segmentes nach unten technisch begrenzt.

Eine aufgrund dessen minimal erreichbare Rillenbreite von ca. 3,2mm und ein minimal erreichbarer Rillenabstand von ca. 2,5mm hat eine hohe Lärmbelästigung zur Folge. Zudem ist die entstehende Kontur der Längsrillen anfällig gegen Witterung, z.B. kann Eis in den Längsrillen zu einem Auseinanderbrechen der Längsrillen führen. Weiterhin werden die Längsrillen bei einer dauerhaften Nutzung der Fahrbahn abgefahren, d.h. die Rillentiefe wird geringer; die Griffigkeit sinkt dadurch im Laufe der Zeit und die Fahrbahn muss nachbearbeitet werden.

Zudem kann es bei der Bearbeitung der Fahrbahnoberfläche mit einem herkömmlichen Sägewerkzeug mit voneinander beabstandeten Diamantsägeblättern in dem Abstand zwischen den Segmenten zu einem unkontrollierten Abplatzen des Fahrbahnbelages kommen. Dies führt zu einer zusätzlichen ungewollten Unebenheit der Fahrbahnoberfläche.

In US 2008/0202488 A1 ist ein Sägeblatt mit einem Segment vorgeschlagen, wobei innerhalb des Segmentes Diamanten in mehreren Schichten gesetzt angeordnet sind, wobei die Schichten in eine Schnittrichtung ausgerichtet sind. In axialer Richtung sind benachbart zu den Schichten nach einer bestimmten Abfolge und mit einer bestimmten Schichtbreite Schichten ohne Diamanten bzw. Schichten mit einer geringeren Konzentration an Diamanten vorgesehen, so dass Schichten mit unterschiedlichen Verschleißfestigkeiten ausgebildet werden. Dies führt bei der Benutzung des Sägeblattes dazu, dass die Diamanten weniger stark segregieren und somit insbesondere eine Langlebigkeit des Sägeblattes verbessert wird, da sich das Sägeblatt weniger schnell abnutzt.

Die US 2003/0089364 A1 beschreibt ebenfalls einen Aufbau mit in Schichten angeordneten Diamanten, wobei zusätzlich vorgesehen ist, dass auf dem Sägeblatt in Umfangsrichtung aufeinanderfolgende Segmente eine versetzte Anordnung der Diamanten aufweisen, so dass ein von einem führenden Segment ausgebildeter Steg von dem nachfolgenden Segment abgeräumt wird, wodurch die Effizienz und somit die Geschwindigkeit beim Durchtrennen einer Oberfläche optimiert werden kann. Ein vergleichbares Sägeblatt zeigt auch die OS 2 318 378, wobei umlaufend jedes zweite Segment auf einem Sägeblatt dreischichtig, mit jeweils unterschiedlichen Verschleißfestigkeiten ausgebildet ist und die dazwischenliegenden Segmente eine konstante durchgängige Verschleißfestigkeit aufweisen, um beim Schneiden eine glatte Schnittkante zu erhalten.

In US 4,883,500 ist ein Sägeblatt mit Segmenten gezeigt, bei dem die Segmente drei Schichten unterschiedlicher Verschleißfestigkeit aufweisen, wobei die Verschleißfestigkeit insbesondere durch die Menge eines Abrasivstoffes sowie der Konzentration von Diamanten innerhalb einer Schicht bestimmt wird. Ein vergleichbares Sägeblatt zeigt auch die OS 24 38 601, wobei vorgesehen ist, die Nebenschnittflächen gegenüber der mittigen Hauptschnittfläche derartig zu verstärken, dass eine konkave Profilform der Hauptschnittfläche entsteht. Dadurch kann ein Verschleiß des Sägeblattes optimiert werden.

In GB 2 290 050 A ist ein Sägewerkzeug gezeigt, das auf einer Welle mehrere Sägeblätter aufweist, wobei Segmente eines Sägeblattes jeweils in eine Aussparung des benachbarten Sägeblattes eingreifen, so dass zwei Sägeblätter eine Rille auf einer Oberfläche ausbilden. Durch Abstandshalter können benachbarte Sägeblätter voneinander separiert werden, so dass auch das Einbringen von Rillen in die Oberfläche ermöglicht wird, wobei ein Abstand der Rillen durch den Abstand zwischen den Sägeblättern bzw. den Segmenten und eine Rillenbreite durch eine Segmentbreite bestimmt wird.

Der Erfindung liegt die Aufgabe zugrunde, ein Diamantsägeblatt bereitzustellen, mit dem eine niedrige Lärmbelästigung und eine gute Griffigkeit einer Fahrbahnoberfläche über einen langen Zeitraum erreicht werden kann.

Diese Aufgabe wird durch ein Sägewerkzeug nach Anspruch 1, einer Maschine nach Anspruch 12 sowie einem Verfahren nach Anspruch 13 gelöst. In den Unteransprüchen sind bevorzugte Weiterbildungen angegeben.

Erfindungsgemäß ist demnach vorgesehen, ein Sägewerkzeug mit mehreren Diamantsägeblättern mit jeweils einem Segment bereitzustellen, wobei das Segment aus Schichten mit unterschiedlicher Verschleißfestigkeit ausgebildet ist. Die Verschleißfestigkeit gibt dabei an, wie stark sich eine Schicht insbesondere in Abhängigkeit der Härte und der Verschleißfestigkeit des zu schneidenden Materials, d.h. der Fahrbahnoberfläche, z.B. Beton oder Asphalt, abnutzt bzw. verschlissen wird.

Wird eine vergleichsweise harte Fahrbahnoberfläche, z.B. Beton geschnitten, so weist eine Schicht aus einem weichen Material eine eher hohe Verschleißfestigkeit für den Beton auf. Wird hingegen eine vergleichsweise weiche Fahrbahnoberfläche, z.B. Asphalt geschnitten, so weist eine Schicht aus einem harten Material eine hohe Verschleißfestigkeit für den Asphalt auf. D.h. je nach Fahrbahnoberfläche ist das Material der Schichten anzupassen.

Als Ausgangsmaterial zur Herstellung einer Schicht dient beispielsweise ein Pulvergemisch aus insbesondere Diamanten sowie einem Metallpulver. Das Metallpulver weist dabei je nach gewünschter Verschleißfestigkeit eine unterschiedliche Materialzusammensetzung auf. Zum Erreichen einer weichen Schicht wird beispielsweise Kupfer oder Bronze sowie Stahl als Metallpulver verwendet, für ein hartes Material beispielsweise Wolframcarbid und Stahl. Das Metallpulver sorgt dabei vorteilhafterweise dafür, dass die Diamanten in der fertigen Schicht sowohl chemisch als auch mechanisch zusammengehalten werden.

Die Diamanten können entweder in unterschiedlicher Größe, z.B. 20 Mesh bis 60 Mesh, oder aber mit variierender Konzentration in dem Pulvergemisch vorkommen, um eine bestimmte Verschleißfestigkeit in einer Schicht einzustellen. Unter Mesh wird dabei eine Anzahl von Siebmaschen eines Siebes pro Zoll verstanden, d.h. 20 Mesh = 20 Siebmaschen pro Zoll, so dass bei 20 Mesh größere Diamanten durch das Sieb fallen können als bei 60 Mesh. Vorteilhafterweise können die Diamanten zusätzlich mit Titan beschichtet sein, wobei das Titan bevorzugt auch eine chemische Verbindung mit dem Metallpulver eingehen kann, so dass ein zusätzlicher Parameter zur Einstellung der Härte bzw. der Verschleißfestigkeit einer Schicht herangezogen werden kann. Zudem erhöht die Titanbeschichtung die Schlaganfälligkeit der Diamanten, d.h. ein Diamant kann dadurch zusätzlich vor einem Schlag eines besonders harten Materials in der Fahrbahnoberfläche geschützt werden.

Zum Herstellen eines Segmentes werden zunächst Schicht für Schicht Pulvergemische mit unterschiedlichen Verschleißfestigkeiten gepresst, z.B. gestanzt. Anschließend werden die aufeinanderliegenden Schichten beispielsweise in einem Sintervorgang gehärtet, um ein gehärtetes metallisches Segment auszubilden. Das Segment ist hierbei ein einzelnes zusammenhängendes Segment aus einem metallischen Material (Bindung) mit Diamanten, dessen Verschleißfestigkeit von Schicht zu Schicht variiert. Es können aber auch andere Verfahren zum Ausbilden eines gehärteten metallischen Segments angewandt werden, z.B. Freisintern.

Somit wird sowohl durch die Zusammensetzung des Metallpulvers als auch die Anzahl und Form der Diamanten eine bestimmte Verschleißfestigkeit eingestellt, wobei sowohl die Diamanten als auch das gehärtete Metallpulver am Materialabtrag, d.h. beim Schneiden, der Fahrbahnoberfläche beitragen.

Unter Schneiden wird hierbei verstanden, dass das sich drehende Diamantsägeblatt, wenn es mit dem mehrschichtigen Segment in etwa senkrecht auf die Fahrbahnoberfläche aufgebracht wird, Material von der Fahrbahnoberfläche abträgt, d.h. der Fahrbahnbelag, z.B. Beton oder Asphalt, wird abgefräst, um beispielsweise eine Rille, vorzugsweise eine in Fahrtrichtung ausgedehnte Längsrille auszubilden. Durch die Rille wird somit eine Oberflächenstrukturierung bzw. Texturierung auf der Fahrbahnoberfläche ausgebildet.

Das Segment ist dazu auf einem äußeren Umfang eines als Scheibe ausgeführten Kerns mit einem konzentrischen Loch in seiner Mitte angeordnet, wobei der Kern vorzugsweise aus Stahl gefertigt ist und das Segment beispielsweise durch Sintern, Löten, Kleben oder Schweißen am Kern befestigt sein kann. Das Segment ist in radialer und axialer Richtung bezüglich des Kerns ausgedehnt und umlaufend auf dem äußeren Umfang des Kerns ausgebildet, wobei einzelne, radial zum Kern verlaufende Aussparungen bzw. Einschnitte vorgesehen sein können, die das Segment in mehrere gleichgroße Segment-Bereiche unterteilen. Als Segment wird somit im Rahmen der Erfindung ein auf dem gesamten Kernumfang verlaufender ringförmiger Körper verstanden, der in Segment-Bereiche unterteilt sein kann. Eine Segmentbreite, d.h. die axiale Ausdehnung des Segmentes kann insbesondere zwischen 3 mm und 20mm, beispielsweise bei 6mm liegen, wobei die axiale Ausdehnung des Segmentes größer ist als eine Kernbreite, d.h. die Ausdehnung des Kerns in axialer Richtung.

Erfindungsgemäß grenzen die Schichten des Segments in axialer Richtung aneinander. Eine Schichtbreite, d.h. die Ausdehnung einer Schicht in axialer Richtung liegt vorteilhafterweise bei ca. einem Millimeter, so dass in einem Segment mit einer Segmentbreite von beispielsweise 6mm in axialer Richtung sechs Schichten mit identischer Schichtbreite aneinander grenzen. Je nach Fahrbahnoberfläche kann aber auch eine andere Schichtbreite, z.B. 1,5mm eingestellt werden, um ein optimales Verhalten bzgl. Griffigkeit, Lärm und Aquaplaning auf der Fahrbahnoberfläche einstellen zu können.

Dadurch wird erfindungsgemäß erkannt, dass mehrere, nebeneinander angeordnete Rillen mit sehr schmaler Rillenbreite auf einer Fahrbahnoberfläche ausgebildet werden können, ohne das Diamantsägeblatt bzw. das Segment sehr dünn fertigen zu müssen und somit an die technisch mögliche Untergrenze bei der Fertigung des Kerns oder des Segmentes zu gelangen. Zudem können bereits mehrere Rillen von lediglich einem Diamantsägeblatt in die Fahrbahnoberfläche eingebracht werden, so dass zum Ausbilden der Rillen auf der Fahrbahn kein Abstand zwischen Segmenten benachbarter Diamantsägeblätter mehr nötig ist. Dadurch ist zwar die Fläche, die zum Ausbilden einer Rille geschnitten wird, größer, da kein unbehandelter Abstand mehr zwischen den Diamantsägeblättern vorhanden ist. Vorteilhafterweise findet aber dadurch das Abtragen der Fahrbahnoberfläche kontrollierter statt, da es zu keinem unkontrollierten Abplatzen des Fahrbahnbelages kommen kann, da kein unbehandelter Abstand mehr vorhanden ist.

Denn wird das sich drehende Diamantsägeblatt mit dem mehrschichtigen Segment senkrecht auf die Fahrbahnoberfläche aufgesetzt bzw. aufgedrückt, führen die unterschiedlichen Verschleißfestigkeiten der Schichten wie folgt dazu, dass der Fahrbahnbelag unterschiedlich tief abgetragen wird:
Bei einem Fahrbahnbelag mit einer hohen Härte wird sich beispielsweise eine erste Schicht mit einer niedrigen Verschleißfestigkeit schneller abnutzen als eine daran angrenzende zweite Schicht mit einer hohen Verschleißfestigkeit. Nach mehrmaliger Benutzung des Diamantsägeblattes wird somit an einer äußeren Segmentoberfläche, d.h. dem äußeren Umfang des Segments, mit dem das Segment auf die Fahrbahnoberfläche aufsetzt, eine eingekerbte Segmentoberfläche ausgebildet. Da sich die erste Schicht schneller abnutzt, weist sie vom Mittelpunkt des Kerns aus gesehen einen geringeren äußeren Durchmesser auf als die zweite Schicht, die sich weniger schnell abnutzt. Die dritte Schicht weist wieder einen geringeren Durchmesser auf, usw., so dass in diesem Fall bei jeder Schicht mit geringer Verschleißfestigkeit eine umlaufende Kerbe bzw. Nut in der äußeren Segmentoberfläche entsteht. Die Segmentoberfläche stellt somit in etwa das Negativ der Fahrbahnoberfläche nach ihrer Bearbeitung dar.

Damit die Segmentoberfläche bereits bei der ersten Benutzung des Diamantsägeblattes eingekerbt ist, kann das Segment nach seiner Herstellung zunächst geschärft werden, d.h. so lange bearbeitet, bis sich eine der Verschleißfestigkeit der Schichten entsprechende Segmentoberfläche als Negativ für die gewollte Texturierung der Fahrbahnoberfläche ausgebildet hat.

Bei der ersten Benutzung des Diamantsägeblattes trägt somit lediglich die zweite Schicht mit hoher Verschleißfestigkeit einen Teil der Fahrbahnoberfläche ab, während die erste und dritte Schicht weniger im Vergleich zur zweiten Schicht abtragen; eine Rille entsteht, deren Rillentiefe durch den Unterschied der Durchmesser der Schichten und deren Rillenbreite durch die Schichtbreite bestimmt ist. Somit können beispielsweise Rillen mit einem Rillenabstand und einer Rillenbreite von ca. 1mm hergestellt werden. Dadurch kann vorteilhafterweise die Rillentiefe sehr genau eingestellt werden, da unabhängig davon, wie stark das Sägewerkzeug auf die Fahrbahnoberfläche gedrückt wird in etwa dieselbe Rillentiefe entsteht, der Herstellungsaufwand wird verringert. Denn im Gegensatz dazu ist die Rillentiefe bei herkömmlichen Sägewerkzeugen davon abhängig, wie stark das Sägewerkzeug auf die Fahrbahnoberfläche gedrückt wird. Dies kann durch Messungenauigkeiten beim Annähern des Sägewerkzeuges zu unterschiedlichen Rillentiefen führen und somit zu einem erhöhten Herstellungsaufwand.

Somit kann vorteilhafterweise eine geringere Rillenbreite und ein geringerer Rillenabstand erreicht werden, wodurch die Griffigkeit verbessert wird und auch der entstehende Lärmpegel sinkt. Zudem ist die Anzahl der Rillen pro Fläche höher, so dass sich die Kraft eines darauf fahrender Reifens besser verteilen kann, so dass auch die Belastung auf die Rille bzw. einen zwischen den Rillen verlaufenden Steg niedriger ist und dieser somit weniger häufig bricht; die Fahrbahnoberfläche hat eine höhere Lebensdauer und muss dadurch weniger oft nachbearbeitet werden. Desweiteren kann eine Ausdehnung der Rillen durch die Dimensionierung der Schichten bereits sehr genau eingestellt werden; eine entsprechend genaue Beabstandung mehrerer Diamantsägeblätter zueinander in einem Sägewerkzeug kann entfallen; der Herstellungsaufwand sinkt, während die Genauigkeit beim Ausbilden der Rillen steigt.

Erfindungsgemäß ist vorgesehen, dass die Schichten eines Segments eine alternierende Verschleißfestigkeit aufweisen, d.h. an eine erste Schicht mit niedriger Verschleißfestigkeit grenzt in axialer Richtung eine zweite Schicht mit hoher Verschleißfestigkeit und daran eine dritte Schicht, deren Verschleißfestigkeit derjenigen der ersten Schicht entspricht, usw., d.h. die niedrige und die hohe Verschleißfestigkeit wechseln sich auf der gesamten Segmentbreite ab. Dadurch können vorteilhafterweise gleichmäßige Rillen mit einer Rillenbreite und einem Abstand von ca. einem Millimeter sowie einer gleichmäßigen Form der Rillen auf der Fahrbahnoberfläche ausgebildet werden.

Vorzugsweise kann für die Schichten eine Materialzusammensetzung und eine Anordnung zueinander gewählt werden, die es erlaubt, dass sich die Schichten beim Schärfen und auch bei der Benutzung des Diamantsägeblattes, d.h. beim Fräsen der Fahrbahnoberfläche, an ihrem äußeren Umfang auf einem Oberflächen-Bereich, in axialer Richtung abrunden, wobei die Rundung bzw. Wölbung benachbarter Schichten alterniert, d.h. eine erste Schicht wird in axialer Richtung in etwa konkav abgerundet und eine daran angrenzende zweite Schicht in etwa konvex. Dadurch entsteht vorteilhafterweise eine gewellte äußere Segmentoberfläche mit nahezu fließenden Übergängen ohne Abstufungen, die idealisiert beispielsweise einem Sinus entspricht. Die genaue Form kann dabei je nach Härte und Aufbau der Fahrbahnoberfläche sowie Zusammensetzung der jeweiligen Schichten innerhalb einer Toleranz variieren; die konvexen bzw. konkaven Wölbungen stellen somit einen idealisierter Verlauf dar, der nach oben und unten geringfügig abweichen kann, ohne dabei aber von einem welligen Verlauf der Segmentoberfläche abzuweichen.

Dies wird erreicht, indem Schichten mit alternierender Verschleißfestigkeit mit einer Schichtbreite von vorzugsweise ca. 1 mm aneinander angrenzen. Bei der Benutzung bzw. beim Schärfen nutzt sich eine Schicht mit hoher Verschleißfestigkeit dann zunächst an den auf der Fahrbahnoberfläche aufliegenden Kanten der Schicht ab, so dass ein im Wesentlichen konvex gerundeter Oberflächen-Bereich an dieser Schicht entsteht. Eine Schicht mit einer niedrigen Verschleißfestigkeit hingegen nutzt sich zunächst mittig ab und an den Kanten weniger stark, so dass ein im Wesentlichen konkav gerundeter Oberflächen-Bereich an dieser Schicht entsteht.

Dadurch wird vorteilhafterweise auch die Kontur bzw. Texturierung der Rillen in der Fahrbahnoberfläche wellig ausgebildet, d.h. die strukturierten Rillen sind an den Kanten abgerundet. Dadurch kann vorteilhafterweise die Wetterbeständigkeit verbessert werden, da zwischen den Rillen entstehendes Eis die Stege nicht zerbricht, da das Eis bei seiner Ausdehnung über die abgerundeten Kanten gleiten kann. Dadurch "fängt" sich auch weniger Schall in den Rillen, wodurch die Lärmbelästigung sinkt.

Das Diamantsägeblatt ist derartig ausgeführt, dass es die Oberfläche von Beton oder Asphalt strukturieren kann. Aber auch jeder andere Fahrbahnbelag ist möglich, der mit Rillen versehen wird, um insbesondere die Vorteile der Erfindung zu erreichen.

Erfindungsgemäß ist ein Sägewerkzeug vorgesehen, das eine Welle aufweist, auf der mehrere nebeneinanderliegende Diamantsägeblätter aufgesteckt und verdrehfest befestigt sind. Der Abstand der Sägeblätter zueinander auf der Welle ist hierbei vorteilhafterweise so gewählt, dass sich die Segmente benachbarter Sägeblätter berühren. D.h. die jeweils äußeren Schichten benachbarter Segmente liegen flächig aneinander, so dass die vorzugsweise alternierende Schichtstruktur auch über mehrere Diamantsägeblätter bzw. über das gesamte Sägewerkzeug erreicht werden kann. Zum Ausbilden von Rillen auf einer Fahrbahnoberfläche müssen die Diamantsägeblätter somit nicht mehr voneinander beabstandet sein, da das Ausbilden von Rillen bereits durch der Schichtaufbau in den Segmenten gewährleistet wird.

Vorteilhafterweise kann dadurch eine Querbelastung auf die Segmente abgefangen werden, da benachbarte Segmente einer Querbelastung entgegenwirken. Dazu kann auf der Welle ein Abstandshalter bzw. ein Spacer vorgesehen sein, um den Abstand der Diamantsägeblätter festzulegen und diesen bei der Benutzung konstant zu halten. Zudem kann der Herstellungsaufwand des Sägewerkzeuges minimiert werden, da der Abstand zwischen den Diamantsägeblättern im Bereich der Segmente entfällt und somit nicht mehr eingestellt werden muss, um einen entsprechenden Rillenabstand zu erhalten. Denn dieser ist bereits durch den Schichtaufbau definiert.

Die Segmente sind vorzugsweise derartig aufgebaut, dass eine gerade Anzahl (2n) an alternierende Schichten pro Segment vorgesehen sind, so dass das Segment an einem seiner Enden mit einer Schicht einer ersten Verschleißfestigkeit abschließt und an dem anderen Ende mit einer Schicht einer zweiten Verschleißfestigkeit. Dadurch kann die alternierende Schichtfolge fortgeführt werden, wenn zwei benachbarte Segmente entsprechend aneinandergelegt werden. Dies hat den Vorteil, dass die Diamantsägeblätter nacheinander lediglich mit der richtigen Orientierung auf die Welle des Sägewerkzeuges aufzusetzen sind. Somit ist lediglich eine Art von Diamantsägeblättern zu fertigen, die auf die Welle aufgesetzt werden können. Dadurch kann der Herstellungsaufwand und die Herstellungskosten gespart werden.

Es ist aber auch denkbar, jeden beliebigen anderen Schichtaufbau, z.B. mit einer ungeraden Anzahl (2n+1) an alternierenden Schichten zu verwenden. In diesem Fall schließen beide Enden des Segments mit derselben Schicht ab. Dementsprechend muss für das angrenzende Diamantsägeblatt ein Segment mit der entsprechend anderen Schicht am äußeren Ende gewählt werden, um eine alternierende Verschleißfestigkeit über das gesamte Sägewerkzeug zu erreichen. In diesem Fall sind zwei Typen von Sägeblättern notwendig, um einen alternierenden Schichtaufbau über das gesamte Sägewerkzeug zu erhalten.

Die Breite des Sägewerkzeuges entspricht in etwa 0,6m bis 1,4m, d.h. es ergibt sich vorteilhaferweise ein alternierender Schichtaufbau über diese Länge, so dass sich ca. 300 bis 700 Rillen ergeben, die mit einem Sägewerkzeug in die Fahrbahnoberfläche gefräst werden können.

Weiterhin ist erfindungsgemäß eine Maschine vorgesehen, an der eine Halterung für ein Sägewerkzeug ausgebildet ist, in der das Sägewerkzeug mit vorzugsweise 35-55 m/s Umfangsgeschwindigkeit gedreht werden kann. Wird das Sägewerkzeug durch die Halterung an die Fahrbahnoberfläche angenähert und drücken die sich drehenden Diamantsägeblätter bzw. mehrschichtigen Segmente der Welle auf die Fahrbahnoberfläche, werden bei einer Bewegung der Maschine in Fahrtrichtung Rillen, vorzugsweise Längsrillen in der Fahrbahnoberfläche ausgebildet. Die Maschine bewegt sich vorzugsweise mit einer Geschwindigkeit von 3m/min bis 10m/min.

Die Erfindung wird im Folgenden anhand der beiliegenden Zeichnungen an einer Ausführungsform näher erläutert. Es zeigen:
- Fig. 1: ein Diamantsägeblatt in einer Draufsicht;
- Fig. 2: ein Ausschnitt des Diamantsägeblattes gemäß Fig. 1 in einer Schnittansicht;
- Fig. 2a: ein benutztes Diamantsägeblatt gemäß Fig. 2 über einer strukturierten Fahrbahnoberfläche;
- Fig. 3: ein Sägewerkzeug mit mehreren benutzten Diamantsägeblättern in einer Schnittansicht; und
- Fig. 4: eine Maschine mit einem Sägewerkzeug gemäß Fig. 3.

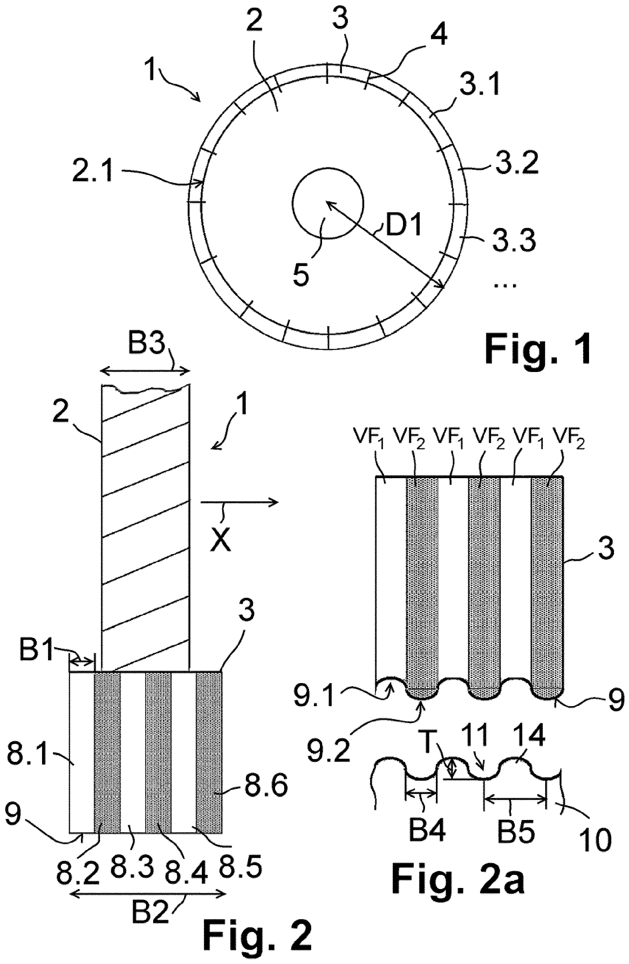

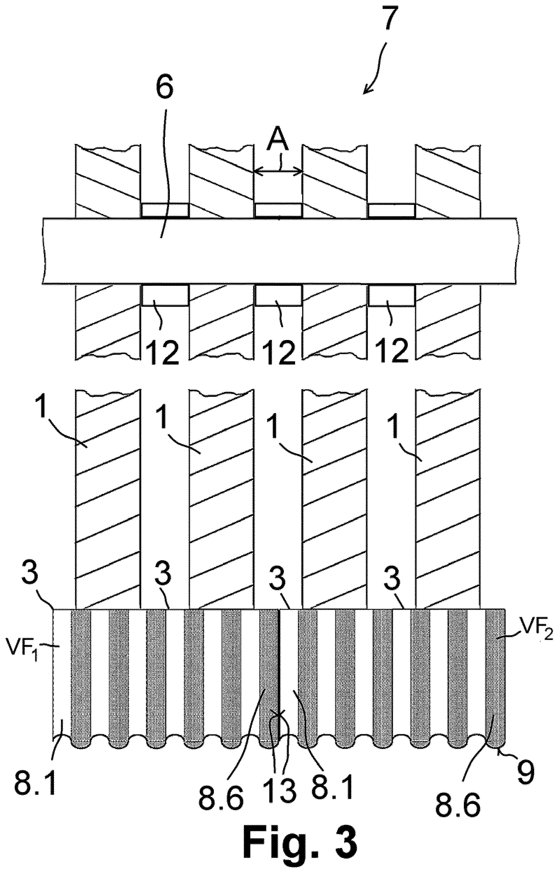

Gemäß Fig. 1 ist ein Diamantsägeblatt 1 vorgesehen, das einen scheibenförmigen Kern 2 und an dessen äußerem Umfang 2.1 ein umlaufendes Segment 3 aufweist. Das Segment 3 ist durch radial verlaufende Einschnitte 4 in mehrere Segment-Bereiche 3.1, 3.2, 3.3, usw. unterteilt. Das Segment 3 bzw. die Segment-Bereiche 3.1, 3.2, 3.3 sind vorzugsweise durch Sintern, Löten, Kleben oder Schweißen an dem Kern 2 befestigt. Im Kern 2 ist mittig ein konzentrisches Loch 5 vorgesehen, mit dem das Diamantsägeblatt 1 auf eine Welle 6 eines Sägewerkzeuges 7 aufgesteckt werden kann (s. Fig. 3).

Das Segment 3 wird gemäß diesem Ausführungsbeispiel aus sechs Schichten 8.i mit i = 1 bis 6 gebildet, die in axialer Richtung X flächig aneinander angrenzen, wie in Fig. 2 dargestellt. In axialer Richtung X weist jede Schicht 8.i eine Schichtbreite B1 von ca. 1mm auf, so dass das Segment 3 insgesamt eine Segmentbreite B2 von 6mm aufweist. Eine Kernbreite B3 ist ca. 3mm, d.h. sie ist geringer als die Segmentbreite B2. Eine äußere Segmentoberfläche 9 ist bei dem unbenutzten Diamantsägeblatt 1 gemäß Fig. 2 zunächst planar ausgebildet. D.h. ein äußerer Durchmesser D1 (s. Fig. 1) des Segmentes 3 verläuft im Wesentlichen konstant über das gesamte Segment 3.

Die einzelnen Schichten 8.i weisen eine unterschiedliche Verschleißfestigkeit VF auf, wobei die Verschleißfestigkeit innerhalb des Segmentes 3 alterniert. D.h. eine erste Schicht 8.1 weist eine geringe Verschleißfestigkeit VF₁ auf, die zweite Schicht 8.2 eine hohe Verschleißfestigkeit VF₂. Daran schließt sich eine dritte Schicht 8.3 mit der geringen Verschleißfestigkeit VF₁ und eine vierte Schicht 8.4 mit der hohen Verschleißfestigkeit VF₂ an, usw. (s. Fig. 2a)

Die Verschleißfestigkeit VF wird durch die Materialzusammensetzung der jeweiligen Schichten 8.i bestimmt. Eine Schicht 8.i wird dabei in einem Härtungsprozess, z.B. Sintern, aus einem Pulvergemisch aus insbesondere Diamanten und einem Metallpulver hergestellt. Eine Konzentration oder eine Größe der Diamanten und/oder die Materialzusammensetzung des Metallpulvers, z.B. Wolfram-Carbid, Eisen und/oder Kupfer, definiert hierbei die Härte und somit die Verschleißfestigkeit VF der Schicht 8.i.

Durch die verschiedenen Verschleißfestigkeiten VF ergibt sich für jede Schicht 8.i eine unterschiedliche Wechselwirkung mit dem Material einer Fahrbahnoberfläche 10, die mit dem Diamantsägeblatt 1 strukturiert werden soll. Bei einem harten Material der Fahrbahnoberfläche 10 nutzt sich eine Schicht 8.i mit einer hohen Verschleißfestigkeit VF₂ langsamer ab als eine Schicht 8.i mit einer niedrigen Verschleißfestigkeit VF₁.

Dies führt zu einem Verlauf der äußeren Segmentoberfläche 9, die Fig. 2a gezeigt ist, die ein Segment 3 im benutzten Zustand darstellt. Die äußere Segmentoberfläche 9 ist hierbei gewellt ausgeführt, wobei ein erster Oberflächen-Bereich 9.1 der ersten, dritten und fünften Schicht 8.1, 8.3, 8.5 in etwa konkav und ein zweiter Oberflächen-Bereich 9.2 der zweiten, vierten und sechsten Schicht 8.2, 8.4, 8.6 in etwa konvex ausgebildet ist. Dadurch ergibt sich ein welliger, fließender Übergang zwischen den Schichten 8.i, wobei dies lediglich ein idealisierter Verlauf der Segmentoberfläche 9 darstellt, der durch Unreinheiten in der Fahrbahnoberfläche 10 oder eine inhomogene Materialzusammensetzung der Schichten 8.i leicht variieren kann.

Die konkave bzw. konvexe Wölbung kann im Wesentlichen durch die Anordnung der einzelnen Schichten 8.i zueinander erreicht werden, d.h. dadurch, dass die einzelnen Schichten 8.i in axialer Richtung X aneinander angrenzen. Dadurch nutzt sich eine Schicht 8.i mit hoher Verschleißfestigkeit VF₂ zunächst an den Kanten ab und eine Schicht 8.i mit niedriger Verschleißfestigkeit VF₁ zunächst in der Mitte, so dass die besagten Wölbungen ausgebildet werden.

Wird das Diamantsägeblatt 1 in Rotation versetzt und an die Fahrbahnoberfläche 10 gedrückt, wird der Belag der Fahrbahnoberfläche 10 in den Bereichen, in denen eine Schicht 8.i mit hoher Verschleißfestigkeit VF₂ einwirkt, abgetragen, wie in Fig. 2a gezeigt. In den Bereichen, in denen eine Schicht 8.i mit niedriger Verschleißfestigkeit VF₁ anliegt, wird der Belag lediglich leicht abgerundet, so dass mehrere Rillen 11 mit Rillenbreiten B4, die in etwa der Schichtbreite B1 entsprechen, ausgebildet werden. Die Rillen 11 haben einen Rillenabstand B5 von ebenfalls in etwa der Schichtenbreite B1.

Die Segmentoberfläche 9 stellt somit das Negativ der gewollten Texturierung in der Fahrbahnoberfläche 10 dar. Die gewellte Segmentoberfläche 9 wird somit ebenfalls auf die Fahrbahnoberfläche 10 übertragen. Dadurch ist auch ein zwischen den Rillen 11 liegender Steg 14 abgerundet ausgeführt, so dass beispielsweise in der Rille 11 eingeschlossenes Eis den Steg 14 bei dessen Ausdehnung nicht wegdrücken und somit abbrechen kann.

Um eine Fahrbahnoberfläche 10 über einen größeren Bereich mit Rillen 11 versehen zu können, ist gemäß Fig. 3 ein Sägewerkzeug 7 vorgesehen, das eine Welle 6 und mehrere Diamantsägeblätter 1 aufweist. Die Diamantsägeblätter 1 sind auf die Welle 6 aufgesteckt und daran verdrehfest befestigt. Zwischen den Diamantsägeblättern 1 ist jeweils ein um die Welle 6 umlaufender Abstandshalter 12 (Spacer) vorgesehen, der die Diamantsägeblätter 1 in einem Abstand A zueinander hält. Der Abstand A ist hierbei derartig gewählt, dass sich Segmente 3 benachbarter Diamantsägeblätter 1 berühren, wobei Längsseiten 13 benachbarter Segmente 3 flächig aneinander liegen.

Der Schichtaufbau der Segmente 3 ist hierbei so gewählt, dass die linke äußere Schicht 8.1 jedes Segments 3 eine Schicht mit niedriger Verschleißfestigkeit VF₁ ist und die rechte äußere Schicht 8.6 jedes Segments 3 eine Schicht mit hoher Verschleißfestigkeit VF₂. Werden derartig ausgeführte Segmente 3 aneinandergelegt, berührt die rechte äußere Schicht 8.6 des einen Segments 3 die linke äußere Schicht 8.1 des rechten benachbarten Segmentes 3, wodurch der alternierende Schichtaufbau des Segments 3 über das gesamte Sägewerkzeug 7 fortgeführt wird.

Dadurch können bei einer Länge des Sägewerkzeuges 7 von beispielsweise 0,6m und einer Schichtbreite B1 von 1 mm ca. 300 Rillen 11 nebeneinander in die Fahrbahnoberfläche 10 strukturiert werden, wobei eine Rillenbreite B4 von 1 mm und ein Rillenabstand B5 von ca. 1 mm erreicht werden kann.

Die Schichtbreite B1, die Segmentbreite B2 sowie der Abstand A können hierbei beliebig angepasst werden, um auch andere Rillenbreiten B4 erreichen zu können, die den Anforderungen an den Lärmpegel, die Griffigkeit sowie der Aquaplaning-Eigenschaften zu genügen. Zum Anpassen einer Rillentiefe T kann zudem das Material der Schichten 8.i entsprechend gewählt werden, so dass sich diese je nach gewünschter Tiefe T nach einiger Zeit einstellt.

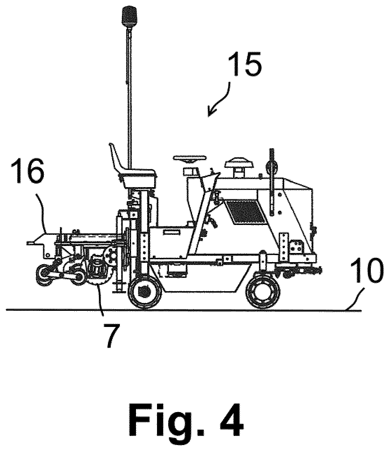

Um das Sägewerkzeug 7 auf die Fahrbahnoberfläche 10 drücken zu können, ist gemäß Fig. 4 eine Maschine15, z.B. ein Fugenschneider mit einer Halterung 16 vorgesehen, die das Sägewerkzeug 7 verdrehbar hält, wobei das Sägewerkzeug 7 mit einer Umfangsgeschwindigkeit von beispielsweise 45 m/s gedreht werden kann. Die Halterung 16 kann an die Fahrbahnoberfläche 10 angenähert werden, so dass die Segmente 3 auf den Diamantsägeblättern 1 mit dem Belag der Fahrbahnoberfläche 10 wechselwirken können, wodurch dieser abgetragen wird. Je nach Antriebsleistung der Maschine 15 können Rillen 11 mit einer Geschwindigkeit von ca. 3 m bis 10 m pro Minute in die Fahrbahnoberfläche 10 eingebracht werden.

## Patentansprüche

1. Sägewerkzeug (7) zum Ausbilden einer Oberflächenstruktur (11, 14) auf einer Fahrbahnoberfläche (10), mindestens aufweisend:
eine Welle (6) und mehrere Diamantsägeblätter (1),
wobei jedes Diamantsägeblatt (1) einen scheibenförmigen Kern (2) mit einem Loch (5) zum Aufsetzen auf die Welle (6), und ein Segment (3), das auf einem äußeren Umfang des Kerns (2) angeordnet ist, aufweist,
wobei die Diamantsägeblätter (1) mit dem scheibenförmigen Kern (2) auf der Welle (6) angeordnet sind,
**dadurch gekennzeichnet, dass**
sich die Segmente (3) benachbarter Diamantsägeblätter (1) an einer Längsseite (13) flächig berühren, wobei jedes Segment (3) aus mindestens zwei in axialer Richtung (X) aneinandergrenzenden, sich jeweils in radialer und axialer Richtung (X) erstreckenden Schichten (8.i; i=1...6) ausgebildet ist, wobei axial aneinandergrenzende Schichten (8.i; i=1...6) des Segments (3) jeweils unterschiedliche Verschleißfestigkeiten (VF, VF₁, VF₂) aufweisen und die Verschleißfestigkeit (VF, VF₁, VF₂) der Schichten (8.i; i=1...6) in axialer Richtung (X) über das gesamte Segment (3) alterniert, wobei durch zwei axial aneinandergrenzende Schichten (8.i; i=1...6) jeweils eine Rille (11) ausbildbar ist zum Einstellen einer Griffigkeit und eines Lärmpegels der Fahrbahnoberfläche (10), und
in axialer Richtung (X) aneinandergrenzende Schichten (8.i; i=1..6) benachbarter Segmente (3) verschiedene Verschleißfestigkeiten (VF, VF₁, VF₂) aufweisen zum Ausbilden eines alternierenden Schichtaufbaus über das gesamte Sägewerkzeug (7).

2. Sägewerkzeug (7) nach Anspruch 1, **dadurch gekennzeichnet, dass** ein Segment (3) eine gerade Anzahl (n) von mindestens vier oder eine ungerade Anzahl (n) von mindestens fünf Schichten (8.i; i=1...6) aufweist, wobei durch zwei axial aneinandergrenzende Schichten (8.i; i=1...6) jeweils eine Rille (11) ausbildbar ist.

3. Sägewerkzeug (7) nach Anspruch 1 oder 2, **dadurch gekennzeichnet, dass** jede Schicht (8.i; i=1...6) Diamanten aufweist und die Verschleißfestigkeit (VF, VF₁, VF₂) der Schichten (8.i; i=1...6) abhängig von der Konzentration und/oder der Größe der Diamanten ist.

4. Sägewerkzeug (7) nach Anspruch 3, **dadurch gekennzeichnet, dass** die Verschleißfestigkeit (VF, VF₁, VF₂) der Schichten (8.i; i=1...6) abhängig von einer Materialzusammensetzung der Schichten (8.i; i=1...6) ist, wobei die Materialzusammensetzung ein gehärtetes metallisches Material, z.B. aus Wolframcarbid, Stahl und/oder Kupfer, enthält zum chemischen und mechanischen Binden der Diamanten.

5. Sägewerkzeug (7) nach einem der vorhergehenden Ansprüche, **dadurch gekennzeichnet, dass** das mehrschichtige Segment (3) gesintert ist.

6. Sägewerkzeug (7) nach einem der vorhergehenden Ansprüche, **dadurch gekennzeichnet, dass** das Segment (3) eine Segmentbreite (B2) von 3 mm bis 20mm, beispielsweise 6mm aufweist.

7. Sägewerkzeug (7) nach einem der vorhergehenden Ansprüche, **dadurch gekennzeichnet, dass** die Schichten (8.i; i=1...6) eines Segments (3) eine Schichtbreite (B1) von 1 mm bis 3mm, vorzugsweise 1 mm aufweisen.

8. Sägewerkzeug (7) nach einem der vorhergehenden Ansprüche, **dadurch gekennzeichnet, dass** die Schichten (8.i; i=1...6) im Segment (3) an ihrem äußeren Umfang in einem Oberflächen-Bereich (9.1, 9.2) in axialer Richtung (X) abgerundet sind, wobei die Rundung axial aneinandergrenzender Schichten (8.i; i=1...6) über das gesamte Segment (3) alterniert, so dass Schichten (8.i; i=1, 3, 5) einer ersten Verschleißfestigkeit (VF₁) beispielsweise im Wesentlichen konkav abgerundet sind und Schichten (8.i; i=2, 4, 6) einer zweiten Verschleißfestigkeit (VF₂) beispielsweise im Wesentlichen konvex zum Ausbilden einer welligen Segmentoberfläche (9) und einer welligen Texturierung auf der Fahrbahnoberfläche (10).

9. Sägewerkzeug (7) nach einem der vorhergehenden Ansprüche, **dadurch gekennzeichnet, dass** die Kerne (2) benachbarter Diamantsägeblätter (1) durch einen Abstandshalter (12) voneinander beabstandet sind.

10. Sägewerkzeug (7) nach einem der vorhergenenden Ansprüche, **dadurch gekennzeichnet, dass** eine Rillentiefe (T) einer durch ein Diamantsägeblatt (1) ausgebildeten Rille (11) auf einer Fahrbahnoberfläche (10) durch den Unterschied eines Durchmessers der Schichten (8.i; i=1...6) und eine Rillenbreite (B4) der Rille (11) durch eine Schichtbreite (B1) der Schichten (8.i; i=1...6) bestimmt ist.

11. Sägewerkzeug (7) nach einem der vorhergehenden Ansprüche, **dadurch gekennzeichnet, dass** ein Segment (3) schichtweise mit unterschiedlichen Verschleißfestigkeiten (VF, VF₁, VF₂) gepresst ist.

12. Maschine (15), mindestens aufweisend:
eine auf eine Fahrbahnoberfläche (10) absenkbare Halterung (16), die ein Sägewerkzeug (7) nach einen der vorhergehenden Ansprüche hält und die ausgebildet ist, die Welle (6) des abgesenkten Sägewerkzeuges (7) derartig zu drehen, dass eine Oberflächenstruktur (11, 14) auf einer Fahrbahnoberfläche (10) ausgebildet werden kann.

13. Verfahren zum Ausbilden einer Oberflächenstruktur (11, 14) auf einer Fahrbahnoberfläche (10) mit einem Sägewerkzeug (7) nach einem der Ansprüche 1 bis 11, wobei das Sägewerkzeug (7) auf die Fahrbahnoberfläche (10) abgesenkt und an diese angedrückt, mit einer Umfangsgeschwindigkeit von 35-55 m/s gedreht wird und mit einer Geschwindigkeit von 3m pro Minute bis 10m pro Minute über die Fahrbahnfläche (10) bewegt wird zum Ausbilden der Oberflächenstruktur (11, 14),
wobei sich die Schichten (8.i; i=1...6) je nach Verschleißfestigkeit (VF, VF₁, VF₂) an ihrem äußeren Umfang in einem Oberflächen-Bereich (9.1, 9.2) abrunden,
wobei sich Schichten (8.i; i=1, 3, 5) einer ersten Verschleißfestigkeit (VF₁) im Wesentlichen konkav abrunden und Schichten (8.i; i=2, 4, 6) einer zweiten Verschleißfestigkeit (VF₂) im Wesentlichen konvex, so dass eine wellige Segmentoberfläche (9) und eine wellige Oberflächenstruktur (11, 14) auf der Fahrbahnoberfläche (10) ausgebildet wird.

## Claims

1. Sawing tool (7) for forming a surface structure (11, 14) on a road surface (10), having at least:
a shaft (6) and a plurality of diamond saw blades (1),
wherein each diamond saw blade (1) has a disc-like core (2) having a hole (5) for placing on the shaft (6), and a segment (3) which is arranged on an outer periphery of the core (2), wherein the diamond saw blades (1) are arranged with the disc-like core (2) on the shaft (6),
**characterised in that**
the segments (3) of adjacent diamond saw blades (1) touch each other in a planar manner at a longitudinal side (13),
wherein each segment (3) is formed from at least two layers (8.i; i=1...6) which adjoin each other in an axial direction (X) and which extend in each case in a radial and axial direction (X), wherein axially adjacent layers (8.i; i=1...6) of the segment (3) each have different levels of wear resistance (VF, VF₁, VF₂) and the wear resistance (VF, VF₁, VF₂) of the layers (8.i; i=1...6) alternates in an axial direction (X) over the entire segment (3), wherein by means of two axially adjacent layers (8.i; i=1...6) a groove (11) can be formed in order to adjust a skid resistance property and a noise level of the road surface (10), and
layers (8.i; i=1...6), which are adjacent in an axial direction (X), of adjacent segments (3) have different levels of wear resistance (VF, VF₁, VF₂) in order to form an alternating layer construction over the entire sawing tool (7) .

2. Sawing tool (7) according to claim 1, **characterised in that** a segment (3) has an even number (n) of at least four or an odd number (n) of at least five layers (8.i; i=1...6), wherein a groove (11) can be formed in each case by means of two axially adjacent layers (8.i; i=1...6).

3. Sawing tool (7) according to claim 1 or 2, **characterised in that** each layer (8.i; i=1...6) has diamonds and the wear resistance (VF, VF₁, VF₂) of the layers (8.i; i=1...6) is dependent on the concentration and/or the size of the diamonds.

4. Sawing tool (7) according to claim 3, **characterised in that** the wear resistance (VF, VF₁, VF₂) of the layers (8.i; i=1...6) is dependent on a material composition of the layers (8.i; i=1...6), wherein the material composition contains a hardened metal material, for example, of tungsten carbide, steel and/or copper for chemically and mechanically binding the diamonds.

5. Sawing tool (7) according to any one of the preceding claims, **characterised in that** the multi-layer segment (3) is sintered.

6. Sawing tool (7) according to any one of the preceding claims, **characterised in that** the segment (3) has a segment width (B2) of from 3 mm to 20 mm, for example, 6 mm.

7. Sawing tool (7) according to any one of the preceding claims, **characterised in that** the layers (8.i; i=1...6) of a segment (3) have a segment width (B1) of from 1 mm to 3 mm, preferably 1 mm.

8. Sawing tool (7) according to any one of the preceding claims, **characterised in that** the layers (8.i; i=1...6) in the segment (3) are rounded at the outer periphery thereof in a surface region (9.1, 9.2) in an axial direction (X), wherein the rounding of axially adjacent layers (8.i; i=1...6) alternates over the entire segment (3) so that layers (8.i; i=1, 3, 5) having a first wear resistance (VF₁) are, for example, rounded in a substantially concave manner and layers (8.i; i=2, 4, 6) having a second wear resistance (VF₂) are, for example, substantially convex in order to form an undulating segment surface (9) and an undulating texturing on the road surface (10).

9. Sawing tool (7) according to any one of the preceding claims, **characterised in that** the cores (2) of adjacent diamond saw blades (1) are spaced apart from each other by means of a spacer (12).

10. Sawing tool (7) according to any one of the preceding claims, **characterised in that** a groove depth (T) of a groove (11) which is formed by a diamond saw blade (1) on a road surface (10) is determined by the difference of a diameter of the layers (8.i; i=1...6) and a groove width (B4) of the groove (11) is determined by a layer width (B1) of the layers (8.i; i=1...6).

11. Sawing tool (7) according to any one of the preceding claims, **characterised in that** a segment (3) is pressed in layers with different levels of wear resistance (VF, VF₁, VF₂).

12. Machine (15), having at least:
a retention member (16) which can be lowered on a road surface (10) and which retains a sawing tool (7) according to any one of the preceding claims and which is constructed to rotate the shaft (6) of the lowered sawing tool (7) in such a manner that a surface structure (11, 14) can be formed on a road surface (10).

13. Method for forming a surface structure (11, 14) on a road surface (10) with a sawing tool (7) according to any one of claims 1 to 11, wherein the sawing tool (7) is lowered onto the road surface (10) and pressed onto it, is rotated at a peripheral speed of from 35 to 55 m/s and is moved at a speed of from 3 m per minute to 10 m per minute over the road surface (10) in order to form the surface structure (11, 14), wherein the layers (8.i; i=1...6) depending on the wear resistance (VF, VF₁, VF₂) are rounded at the outer periphery thereof in a surface region (9.1, 9.2),
wherein layers (8.i; i=1, 3, 5) having a first wear resistance (VF₁) are rounded in a substantially concave manner and layers (8.i; i=2, 4, 6) having a second wear resistance (VF₂) are rounded in a substantially convex manner so that an undulating segment surface (9) and an undulating surface structure (11, 14) are formed on the road surface (10).

## Revendications

1. Outil de sciage (7) destiné à former une structure superficielle (11, 14) sur une surface de chaussée (10), l'outil de sciage présentant au moins un arbre (6) et plusieurs lames de sciage diamantées (1), chaque lame de sciage diamantée (1) présentant un noyau en forme de disque (2) avec un trou (5) pour l'adaptation sur l'arbre et un segment (3) qui est disposé sur une périphérie extérieure du noyau (2), les lames de sciage diamantées (1) avec le noyau en forme de disque (2) étant disposées sur l'arbre (6), **caractérisé en ce que** les segments (3) de lames de sciage diamantées (1) voisines sont en contact face contre face, chaque segment (3) étant constitué d'au moins deux couches (8.i ; i=1...6) adjacentes dans le sens axial et s'étendant respectivement dans les sens radial et axial (X), des couches (8.i ; i=1...6) axialement adjacentes du segment (3) présentant respectivement des résistances à l'usure différentes (VF, VF₁, VF₂) et la résistance à l'usure (VF, VF₁, VF₂) des couches (8.i ; i=1...6) alterne dans le sens axial (X) sur l'ensemble du segment (3), respectivement une rainure (11) pouvant être formée par deux couches adjacentes axialement (8.i ; i=1...6) pour le réglage d'une adhérence et d'un niveau sonore de la surface de chaussée (10), et **en ce que** des couches adjacentes (8.i ; i=1...6) dans le sens axial (X) de segments voisins présentent différentes résistances à l'usure (VF, VF₁, V₂) pour la formation d'une structure de couches alternantes sur l'ensemble de l'outil de sciage (7).

2. Outil de sciage (7) suivant la revendication 1, **caractérisé en ce qu**'un segment (3) présente un nombre paire (n) d'au moins quatre ou un nombre impaire (n) d'au moins cinq couches (8.i ; i=1...6), respectivement une rainure (11) pouvant être formée par deux couches adjacentes axialement (8.i ; i=1...6).

3. Outil de sciage (7) suivant la revendication 1 ou 2, **caractérisé en ce que** chaque couche (8.i ; i=1...6) présente des diamants et **en ce que** la résistance à l'usure (VF, VF₁, VF₂) des couches (8.i ; i=1...6) est fonction de la concentration et/ou de la taille des diamants.

4. Outil de sciage (7) suivant la revendication 3, **caractérisé en ce que** la résistance à l'usure (VF, VF₁, VF₂) des couches (8.i ; i=1...6) est fonction d'une composition du matériau des couches (8.i ; i=1...6), la composition du matériau contenant un matériau métallique durci, par exemple en carbure de tungstène, acier et/ou cuivre pour la liaison chimique ou mécanique des diamants.

5. Outil de sciage (7) suivant une des revendications précédentes, **caractérisé en ce que** le segment multicouches (3) est fritté.

6. Outil de sciage (7) suivant une des revendications précédentes, **caractérisé en ce que** le segment (3) présente une largeur de segment (B2) de 3 à 20mm, par exemple 6 mm.

7. Outil de sciage (7) suivant une des revendications précédentes, **caractérisé en ce que** les couches (8.i ; i=1...6) d'un segment (3) présentent une largeur de couche (B1) de 1 mm à 3 mm, de préférence de 1 mm.

8. Outil de sciage (7) suivant une des revendications précédentes, **caractérisé en ce que** dans le segment (3), les couches (8.i ; i=1...6) sont, dans une zone de surface (9.1, 9.2), arrondies à leur périphérie extérieure dans le sens axial (X), l'arrondi de couches adjacentes axialement (8.i ; i=1...6) alternant sur l'ensemble du segment (3) de manière que des couches (8.i ; i= 1, 3, 5) d'une première résistance à l'usure (VF₁) présentent, par exemple, un arrondi essentiellement concave et des couches (8.i ; i= 2, 4, 6) d'une seconde résistance à l'usure (VF₂) présentent, par exemple, un arrondi essentiellement convexe pour la formation d'une surface de segment onduleuse (9) et d'une texturation onduleuse sur la surface de chaussée.

9. Outil de sciage (7) suivant une des revendications précédentes, **caractérisé en ce que** les noyaux (2) de lames de sciage diamantées (1) voisines sont écartées les unes des autres par un écarteur (12).

10. Outil de sciage (7) suivant une des revendications précédentes, **caractérisé en ce qu**'une profondeur de rainure (T) d'une rainure (11) formée par une lame de sciage diamantée (1) sur une surface de chaussée (10) est déterminée par la différence d'un diamètre des couches (8.i ; i=1...6) et une largeur de rainure (B4) de la rainure (11) est déterminée par une largeur de couche (B1) des couches (8.i ; i=1...6).

11. Outil de sciage (7) suivant une quelconque des revendications précédentes, **caractérisé en ce qu**'un segment (3) est pressé par couches successives avec différentes résistances à l'usure (VF, VF₁, VF₂).

12. Machine (15) présentant au moins un support (16) pouvant être abaissé sur une surface de chaussée (10), support, qui maintient un outil de sciage (7) suivant une des revendications précédentes et qui est conçu pour tourner l'arbre (6) de l'outil de sciage abaissé de manière qu'une structure superficielle (11, 14) puisse être formée sur une surface de chaussée (10).

13. Procédé destiné à former une structure superficielle (11, 14) sur une surface de chaussée (10) avec un outil de sciage (7) suivant une des revendications 1 à 11, l'outil de sciage (7) étant abaissé sur la surface de la chaussée et appliqué contre celle-ci, puis tourné à une vitesse périphérique de 35 à 55 m/s et déplacé sur la surface de chaussée (10) à une vitesse de 3m à 10m par minute pour former la structure superficielle (11, 14), les couches (8.i ; i=1...6) étant, dans une zone de surface (9.1, 9.2) arrondies à leur périphérie extérieure en fonction de la résistance à l'usure (VF, VF₁, VF₂), des couches (8.i ; i=1...6) d'une première résistance à l'usure (VF₁) présentant un arrondi essentiellement concave et des couches (8.i ; i=1...6) d'une seconde résistance à l'usure (VF₂) présentant un arrondi essentiellement convexe de manière à former une surface de segment onduleuse (9) et une structure superficielle onduleuse (11, 14) sur la surface de la chaussée (10).
